# EUROPÄISCHE PATENTSCHRIFT

(11) **EP 2 124 118 B1**
(45) Veröffentlichungstag und Bekanntmachung des Hinweises auf die Patenterteilung: **06.04.2011**
(21) Anmeldenummer: 08009206.7
(22) Anmeldetag: 19.05.2008
(51) Int. Cl.: G05B 19/416

(54) **Steuereinrichtung zur Steuerung einer Werkzeugmaschine von der Werkzeuge antreibbar sind**
Control device for controlling a machine tool by which tools can be driven
Unité de commande destinée à la commande d'une machine-outil par laquelle les outils sont entraînables

(43) Veröffentlichungstag der Anmeldung: 25.11.2009
(73) Patentinhaber: SIEMENS AKTIENGESELLSCHAFT, 80333 München (DE)
(72) Erfinder: Müller, Jürgen, 71640 Ludwigsburg (DE); Speck, Albrecht, 09337 Hohenstein/Ernstthal (DE); Tolkmitt, Tom, 90768 Fürth (DE)

(56) Entgegenhaltungen:
- EP-A- 0 399 950
- DE-C1- 19 648 347
- DE-U1- 9 318 539
- JP-A- 59 047 140
- JP-A- 60 177 844
- US-A1- 2005 033 459

## Beschreibung

Die Erfindung betrifft eine Steuereinrichtung zur Steuerung einer Werkzeugmaschine von der Werkzeuge antreibbar sind.

Weiterhin betrifft die Erfindung ein Verfahren zum sicheren Betrieb einer Werkzeugmaschine von der Werkzeuge antreibbar sind.

Handelsübliche Werkzeugmaschinen weisen im Allgemeinen einen mit mehreren Werkzeugen bestückten Werkzeugwechsler auf, mit Hilfe dessen das für den jeweiligen notwendigen Bearbeitungsvorgang zur Bearbeitung eines Werkstücks notwendige Werkzeug automatisiert gewechselt wird. Dabei wird das gerade für den Bearbeitungsvorgang benötigte Werkzeug, wie z.B. ein bestimmter Fräser, mittels des Werkzeugwechslers in die Werkzeugaufnahmevorrichtung einer drehbar angeordneten Spindel eingeführt. Der Werkzeugwechselvorgang, sowie der anschließende Bearbeitungsvorgang werden von einer Steuereinrichtung der Werkzeugmaschine gesteuert. Die Steuereinrichtung steuert dabei den Bearbeitungsvorgang und welches Werkzeug für den betreffenden Bearbeitungsvorgang verwendet wird anhand eines Teileprogramms. In dem Teileprogramm wird z.B. festgelegt, mit welcher Geschwindigkeit, insbesondere Drehgeschwindigkeit das das Werkzeug, wie z.B. ein Fräser, rotieren soll.

Die einzelnen Werkzeuge weisen jedoch oftmals große Massenunterschiede und große Unterschiede im geometrischen Aufbau auf. So darf ein entsprechend großes Werkzeug, wie z.B. ein großer Fräser, in der Regel gegenüber einem kleinen Werkzeug, wie z.B. einem kleinen Fräser oder kleinem Bohrer, nur mit einer wesentlich geringen Drehgeschwindigkeit rotieren. Wenn nun, z.B. im Teileprogramm, infolge z.B. einer Unachtsamkeit, eine für das Werkzeug zu hohe Drehgeschwindigkeit (die Drehgeschwindigkeit kann dabei z.B. in Form einer Drehzahl vorliegen) festgelegt wurde, kann dies zu schweren Schäden am Werkzeug, an der Maschine oder sogar im Extremfall zu Personenschäden führen, weil z.B. zerstörte Teile des Werkzeugs mit hoher Geschwindigkeit durch den Raum fliegen können und Personen treffen können.

Aber selbst wenn im Teileprogramm die Drehgeschwindigkeit für das jeweilige Werkzeug korrekt ist, kann es trotzdem zu schweren Schäden am Werkzeug, an der Werkzeugmaschine und von die Werkzeugmaschine umgebenden Personen kommen. Neben den oben beschriebenen Geschwindigkeitsbewegungsgrenzen darf oftmals das Werkzeug auch nur mit einer bestimmten maximalen Beschleunigung und einen maximalen Ruck beschleunigt werden. Wird z.B. ein Werkzeug zu schnell auf die entsprechend vorgegebene Drehgeschwindigkeit beschleunigt, so kann es sich z.B. aus der Werkzeugaufnahmevorrichtung lösen, was zu den oben genannten schweren Schäden führen kann. Dies tritt in der Praxis immer wieder auf, da von der Steuereinrichtung die entsprechenden Sollwerte zur Ansteuerung des den Werkzeug antreibenden Motors, im Allgemeinen von der Steuereinrichtung derart erzeugt werden, dass möglichst schnell die gewünschte Solldrehgeschwindigkeit erreicht wird, d.h. es wird in Abhängigkeit von dem maximalen Beschleunigungsvermögen des Motors das Werkzeug möglichst schnell beschleunigt. Bei kleinen massearmen Werkzeugen ist diese Vorgehensweise im Allgemeinen optimal, sie kann jedoch bei größeren, massenreichen oder komplexer aufgebauten Werkzeugen zu den oben aufgeführten Schäden führen.

Bei handelsüblichen Werkzeugmaschinen ist es bekannt, die Drehzahl des Werkzeugs durch zusätzliche steuerungsexterne Hardware mit einem zusätzlichen Messsystem zu überwachen.

Aus der JP 60177844 ist eine Steuerung zur Steuerung einer Welle bekannt, wobei die Steuerung einen Speicher aufweist, in dem die maximale Umdrehungsgeschwindigkeit einer Spannvorrichtung gespeichert ist.

Aus der DE 93 18 539 U1 ist eine Steuervorrichtung für numerisch gesteuerte Achsen, bei welcher die Steuerung der Achsen mittels eines Lagereglers sowie eines Restwegzählers für den Gesamtverfahrweg eines Verfahrsatzes entweder automatisch über ein an einem Geschwindigkeitssollwert eines Satzpuffers angeschlossenes Begrenzungsmodul und ein Geschwindigkeitsführungsmodul, dessen Restwegeingang mit dem Restwegzähler verbunden ist, oder manuell durch Betätigung eines Handrades weg- und geschwindigkeitsproportional zu den vom Handrad kommenden Inkremente erfolgt.

Es ist Aufgabe der Erfindung eine Steuereinrichtung zu schaffen, die einen sicheren Betrieb einer Werkzeugmaschine ermöglicht.

Diese Aufgabe wird gelöst durch eine Steuereinrichtung zur Steuerung einer Werkzeugmaschine, von der Werkzeuge antreibbar sind, wobei die Steuereinrichtung aufweist,
- eine Sollwerterzeugungseinheit, die zur Erzeugung von Sollwerten zur Steuerung der Bewegung eines Werkzeugs eingerichtet ist,
   wobei die Steuereinrichtung weiterhin aufweist,
- einen Speicher, der zur Speicherung eines den Werkzeugen jeweilig zugeordneten für das jeweilige Werkzeug spezifischen Bewegungsgrenzwerts oder von mehreren den Werkzeugen jeweilig zugeordneten für das jeweilige Werkzeug spezifischen Bewegungsgrenzwerten eingerichtet ist,
- eine Begrenzungseinheit, wobei die Begrenzungseinheit derart ausgebildet ist, dass von der Begrenzungseinheit begrenzte Sollwerte ermittelt werden, indem von der Begrenzungseinheit die Sollwerte anhand des für das jeweilig angetriebene Werkzeug zugeordneten spezifischen Bewegungsgrenzwerts oder der für das jeweilig angetriebene Werkzeug zugeordneten spezifischen Bewegungsgrenzwerten, derart begrenzt werden, dass von den begrenzten Sollwerten der Bewegungsgrenzwert oder die Bewegungsgrenzwerte bei der Bewegung des Werkzeugs nicht überschritten werden,
- eine Sollwertermittelungseinheit, die zur Ermittelung von veränderten Sollwerten aus den begrenzten Sollwerten und weiteren Sollwerten eingerichtet ist, wobei die weiteren Sollwerte von einem Anwender über eine Bedieneinrichtung oder mittels spezifischer Programme in einer Anwendereinheit erzeugbar sind und
- eine Überwachungseinheit, die derart ausgebildet ist, dass die Überwachungseinheit die veränderten Sollwerte und/oder von den veränderten Sollwerten abgeleitete veränderte Beschleunigungssollwerte auf Überschreitung, des dem jeweilig angetriebenen Werkzeugs zugeordneten spezifischen Bewegungsgrenzwerts oder der dem jeweiligen angetriebenen Werkzeug zugeordneten spezifischen Bewegungsgrenzwerten überwacht und bei Überschreitung eines Bewegungsgrenzwerts ein Alarmsignal ausgibt.

Vorteilhafte Ausbildungen der Erfindung ergeben sich aus den abhängigen Ansprüchen.

Durch die Integration einer zusätzlichen Überwachungseinheit in die Steuereinrichtung wird auch die Überwachung von nachträglich veränderten Sollwerten ermöglicht.

Weiterhin erweist es sich also vorteilhaft, wenn die Steuereinrichtung derart ausgebildet ist, dass bei einer von der Überwachungseinheit detektierten Überschreitung des Bewegungsgrenzwerts die Steuereinrichtung derart ein Abbremsen der Bewegung des jeweilig angetriebenen Werkzeugs bis zum Stillestand des jeweilig angetriebenen Werkzeugs steuert, dass der oder die Bewegungsgrenzungswerte während des Abbremsvorgangs für das jeweilig angetriebene Werkzeug nicht überschritten werden. Durch diese Maßnahme wird auch bei einem Abbremsvorgang ein sicherer Betrieb der Werkzeugmaschine ermöglicht und somit zuverlässig verhindert, dass es aufgrund des Abbremsvorganges zu Beschädigungen an einem Werkzeug, der Werkzeugmaschine oder von Personen kommen kann.

Weiterhin erweist es sich also vorteilhaft, wenn die Sollwerte als Lagesollwerte, Geschwindigkeitssollwerte, Beschleunigungssollwerte oder Rucksollwerte vorliegen. Die Ausbildung der Sollwerte als Lagesollwerte, Geschwindigkeitssollwerte, Beschleunigungssollwerte oder Rucksollwerte stellen übliche Ausbildungen der Sollwerte dar.

Weiterhin erweist es sich als vorteilhaft, wenn der Bewegungsgrenzwert als Geschwindigkeitsbewegungsgrenzwert, Beschleunigungsbewegungsgrenzwert oder Ruckbewegungsgrenzwert oder die Bewegungsgrenzwerte als Geschwindigkeitsbewegungsgrenzwerte, Beschleunigungsbewegungsgrenzwerte und/oder Ruckbewegungsgrenzwerte vorliegen. Die Ausbildung des Bewegungsgrenzwerts als Geschwindigkeitsbewegungsgrenzwert, Beschleunigungsgrenzwert oder Ruckgrenzwert oder die Ausbildung der Bewegungsgrenzwerte als Geschwindigkeitsbewegungsgrenzwerte, Beschleunigungsbewegungsgrenzwerte und/oder Ruckbewegungsgrenzwerte stellen übliche Ausbildungen des Grenzwerts oder der Grenzwerte dar.

Weiterhin ist es vorteilhaft eine Werkzeugmaschine mit der erfindungsgemäßen Steuereinrichtung ausbilden.

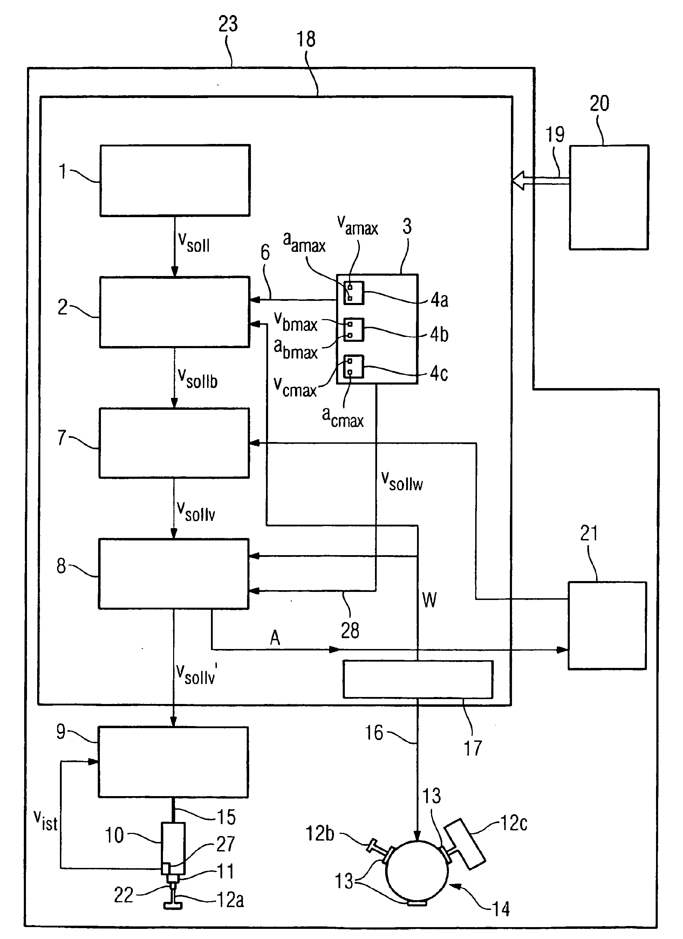

Ein Ausführungsbeispiel ist in der Figur dargestellt und wird im Folgenden näher erläutert.

In der Figur ist in Form einer schematisierten Darstellung in Form eines Blockschaltbildes eine Werkzeugmaschine 23 dargestellt. Die Werkzeugmaschine 23 weist eine Steuereinrichtung 18 zur Steuerung der Werkzeugmaschine, einen Werkzeugwechsler 14 und eine Bedieneinrichtung 21 auf. Der Werkzeugwechsler 14 ist in der momentan in der Figur dargestellten Konfiguration mit den Werkzeugen 12b und 12c (z.B. mit unterschiedlichen Fräsern) bestückt. Die Werkzeuge werden mittels Haltevorrichtungen 13 im Werkzeugwechsler 14 gehalten. Die Steuereinrichtung 18 erzeugt ausgangsseitig ein Ausgangssollwertsignal in Form von in einem äquidistanten Zeittakt erzeugten Ausgangssollwerten v_{sollv'}, die im Rahmen des Ausführungsbeispiels als Ausgangsgeschwindigkeitssollwerte ausgebildet sind. Die Ausgangssollwerte v_{sollv'} werden an eine Antriebseinrichtung 9 ausgegeben und bilden die Regelsollwerte zur Regelung der Bewegung des Werkzeugs 12a. Die Antriebseinrichtung 9 weist intern eine Regelung und einen Umrichter zur Ansteuerung eines Motors, der im Rahmen des Ausführungsbeispiels als Spindelmotor 10 ausgebildet ist, auf. Entsprechend den vorgegebenen Ausgangssollwerten v_{sollv'} regelt die Antriebseinrichtung 9 die Bewegung eines Werkzeugs 12a, d.h. im Rahmen des Ausführungsbeispiels die Drehgeschwindigkeit des Werkzeugs 12a. Die Antriebseinrichtung 9 ist hierzu über eine Verbindung 15 mit dem Spindelmotor 10 verbunden. Der Spindelmotor 10 treibt rotierend eine Spindel 11 an, die eine Werkzeugaufnahmevorrichtung 22 aufweist. In die Werkzeugaufnahmevorrichtung 22 befindet sich im Rahmen des Ausführungsbeispiels gerade das Werkzeug 12a, das z.B. in Form eines Fräsers vorliegen kann. Die Werkzeugaufnahmevorrichtung 22 dient zur Einspannung des Werkzeugs 12a. Über einen Geber 27 wird die Drehgeschwindigkeit vᵢₛₜ der rotierenden Spindel 11 und damit die des Werkzeugs 12a gemessen und zur Regelung als Regelistgröße an die Antriebseinrichtung 9 ausgegeben.

Weiterhin weist die Steuereinrichtung 18 eine Steuereinheit 17 auf, die im Rahmen des Ausführungsbeispiels als eine sogenannte PLC (Programmable Logic Control) ausgebildet ist, auf. Dies Steuereinheit 17 erzeugt Steuersignale 16 zur Ansteuerung des Werkzeugwechslers 14. Mittels des Werkzeugwechslers 14 kann, entsprechend den Steuersignalen 16, das gerade in der Werkzeugaufnahmevorrichtung 22 eingespannte Werkzeug ausgewechselt werden.

Zum linearen Verfahren der Spindel 11 und damit des Werkzeugs 12a weist die Maschine mehrere Antriebseinrichtungen und entsprechend den Antriebseinrichtungen zugeordnete Motoren auf, die entsprechend der Antriebseinrichtung 9 von der Steuereinrichtung 18 jeweilig zugeordnete Ausgangssollwerte zur Steuerung der linearen Bewegung der Spindel 11 als Eingangsgröße erhalten. Der Übersichtlichkeit halber und da sie zum Verständnis der Erfindung unwesentlich sind, sind die zum linearen Verfahren der Spindel 11 vorhandenen Antriebseinrichtungen und Motoren in der Figur nicht dargestellt.

Die Steuereinrichtung 18 weist weiterhin eines Sollwerterzeugungseinheit 1 zur Erzeugung von Sollwerten zur Steuerung der Bewegung des Werkzeugs 12a anhand eines Teileprogramms 20, das von der Steuereinrichtung 18 eingelesen wird, was durch einen Pfeil 19 dargestellt ist, auf. Im Teileprogramm 20 ist dabei jeder Bearbeitungsvorgang in Form von einer Abfolge von Befehlen definiert. Im Allgemeinen werden dabei die Sollwerte vₛₒₗₗ so ermittelt, dass der jeweilige Bearbeitungsvorgang möglichst schnell ausgeführt wird. Die Sollwerte, die im Rahmen des Ausführungsbeispiels in Form von Geschwindigkeitssollwerten vₛₒₗₗ vorliegen, werden dabei in einen festen Zeittakt ausgegeben. Die Sollwerterzeugungseinheit 1 gibt solchermaßen ein Sollwertsignal aus, das in Form einer Abfolge von zeitlich äquidistant ausgegeben Geschwindigkeitssollwerten vₛₒₗₗ vorliegt.

Erfindungsgemäß weist die Steuereinheit 18 einen Speicher 3 auf, in dem für die Werkzeuge 12a, 12b und 12c spezifische Bewegungsgrenzwerte vₐₘₐₓ, a_{amax,} v_{bmax}, a_{bmax,} Vcmax und a_{cmax} gespeichert sind. Die Bewegungsgrenzwerte liegen dabei im Rahmen des Ausführungsbeispiels als Geschwindigkeitsbewegungsgrenzwerte und Beschleunigungsgrenzwerte vor. So darf das Werkzeug 12a maximal mit dem Geschwindigkeitsbewegungsgrenzwert vₐₘₐₓ gedreht und maximal mit dem Beschleunigungsbewegungsgrenzwert aₐₘₐₓ beschleunigt werden. Entsprechend darf das Werkzeug 12b maximal mit dem Geschwindigkeitsbewegungsgrenzwert v_{bmax} gedreht werden und maximal mit dem Beschleunigungsbewegungsgrenzwert a_{bmax} beschleunigt werden. Das Werkzeug 12c darf maximal mit dem Geschwindigkeitsbewegungsgrenzwert v_{cmax} bewegt und mit dem Beschleunigungsbewegungsgrenzwert aₐₘₐₓ beschleunigt werden. Im Rahmen des Ausführungsbeispiels sind somit zu jedem Werkzeug zwei Bewegungsgrenzwerte definiert. Es kann dabei im Allgemeinen aber auch nur ein einzelner Grenzwert pro Werkzeug definiert werden oder aber noch weitere Grenzwerte wie z.B. ein maximaler Ruckbewegungsgrenzwert. Dies ist vom Anwendungsfall und den eingesetzten Werkzeugen abhängig. Solchermaßen sind in dem Speicher 3 zu jedem Werkzeug für das jeweilige Werkzeug spezifische Bewegungsgrenzwerte gespeichert. Die einzelnen Bewegungsgrenzwerte sind dabei Bestandteil eines zu jedem Werkzeug zugeordneten Datensatzes 4a, 4b und 4c.

Erfindungsgemäß weist die Steuereinrichtung 18 eine Begrenzungseinheit 2 zur Ermittlung von begrenzten Sollwerten v_{sollb}, anhand der für das jeweilig angetriebene Werkzeug zugeordneten spezifischen Bewegungsgrenzwerte, auf. Die Begrenzungseinheit 12 begrenzt dabei die Sollwerte vₛₒₗₗ derart, dass die von ihr erzeugten begrenzten Sollwerte v_{sollb} und/ oder von den begrenzten Sollwerten v_{sollb} abgeleitete Bewegungswerte (z.B. nach der Zeit abgeleitete Sollwerte, die z.B. in Form von Beschleunigung und/oder Ruck vorliegen können), den zulässigen spezifischen Bewegungsgrenzwert oder die zulässigen spezifischen Bewegungsgrenzwerte nicht überschreiten. Die Begrenzungseinheit 2 erzeugt somit entsprechend den Bewegungsgrenzwerten angepasste begrenzte Sollwerte v_{sollb}, die die zulässigen Bewegungsgrenzwerte des Werkzeugs 12a, das gerade in die Werkzeugaufnahmevorrichtung 22 eingespannt ist, nicht überschreiten. Die Steuereinheit 17 teilt hierzu der Begrenzungseinheit 2 das gerade in die Werkzeugaufnahmevorrichtung 22 eingespannte Werkzeug mittels eines Signals W mit. Entsprechend dem gerade eingespannten Werkzeug, d.h. im Ausführungsbeispiel ist dies das Werkzeug 12a, liest die Begrenzungseinheit 2, die zu dem Werkzeug 12a zugehörigen Bewegungsgrenzwerte vₐₘₐₓ und aₘₐₓ aus dem Speicher 3 aus, was durch einen Pfeil 6 in der Figur dargestellt ist. Die Begrenzungseinheit 2 berechnet im Folgenden zeitlich abgeleitete Beschleunigungssollwerte durch Ableitung der Geschwindigkeitssollwerte vₛₒₗₗ nach der Zeit (Berechung des Differenzialquotienten nach der Zeit).

Anschließend werden die Geschwindigkeitssollwerte vₛₒₗₗ mit dem Geschwindigkeitsbewegungsgrenzwert vₐₘₐₓ und die Beschleunigungssollwerte aₛₒₗₗ mit dem Beschleunigungsbewegungsgrenzwert aₐₘₐₓ verglichen. Wenn keiner der Bewegungsgrenzwerte überschritten wird, werden die Sollwerte vₛₒₗₗ unverändert an eine Sollwertermittlungseinheit 7 ausgegeben. Die begrenzten Sollwerte v_{sollb} stimmen in diesem Fall mit den Sollwerten vₛₒₗₗ überein. Falls jedoch der Geschwindigkeitsbewegungsgrenzwert vₐₘₐₓ oder der Beschleunigungsbewegungsgrenzwert aₐₘₐₓ überschritten wird, ermittelt die Begrenzungseinheit 2, begrenzte Sollwerte v_{sollb}, die gegenüber den Sollwerten vₛₒₗₗ derart begrenzt werden, dass die begrenzten Sollwerte und von den begrenzten Sollwerten v_{sollb} zeitlich abgeleitete Beschleunigungssollwerte, die jeweilig zugehörigen Bewegungsgrenzwerte vₐₘₐₓ und aₐₘₐₓ nicht überschreiten. Überschreiteten z.B. die Sollwerte vₛₒₗₗ den Geschwindigkeitsbewegungsgrenzwert vₐₘₐₓ, so werden nur noch begrenzte Sollwerte v_{sollb}, die den Geschwindigkeitsbewegungsgrenzwert vₐₘₐₓ nicht überschreiten von der Begrenzungseinheit 2 ausgegeben. Überschreiten z.B. die Beschleunigungssollwerte den maximalen Beschleunigungsbewegungsgrenzwert aₐₘₐₓ, so werden von der Begrenzungseinheit 2 begrenzte Sollwerte v_{sollb} ermittelt, deren zeitliche abgeleiteten Beschleunigungswerte den Beschleunigungsbewegungsgrenzwert aₐₘₐₓ nicht überschreiten.

Die solchermaßen ermittelten begrenzten Sollwerte v_{sollb} könnten nun z.B. als Ausgangssollwerte direkt an die Antriebseinrichtung 9 ausgegeben werden. Im Allgemeinen ist jedoch vom Anwender der Wunsch vorhanden auch noch einmal anwenderspezifisch die Sollwerte bevor sie an die Antriebseinrichtung 9 ausgegeben werden, anwenderspezifisch zu verändern. Die Steuereinrichtung 18 weist hierzu im Rahmen des Ausführungsbeispiels die Sollwertermittlungseinheit 7 auf, die eingangsseitig die begrenzten Sollwerte v_{sollb} einliest. Über eine Bedieneinrichtung 21 der Werkzeugmaschine kann der Anwender, z.B. mittels eines Handrades weitere Sollwerte v_{sollw} erzeugen, um z.B. per Hand die Drehgeschwindigkeit der Spindel 11 und damit des Werkzeugs 12a zu verändern. Weitere Sollwerte können z.B. aber auch von einer in der Figur nicht mehr dargestellten Anwendereinheit erzeugt werden, in der der Anwender mittels spezifischer Programme weitere Sollwerte erzeugen kann. Die Sollwertermittlungseinheit 7 ermittelt aus den begrenzten Sollwerten v_{sollb} und den weiteren Sollwerten v_{sollw} veränderte Sollwerte vₛₒₗₗᵥ. Die veränderten Sollwerte vₛₒₗₗᵥ werden erfindungsgemäß als Eingangsgröße einer Überwachungseinheit 8 zugefügt. Im Rahmen des Ausführungsbeispiels liegen die veränderten Sollwerte vₛₒₗₗᵥ in Form von veränderten Geschwindigkeitssollwerten vₛₒₗₗᵥ vor.

Die Überwachungseinheit 8 berechnet zuerst aus den veränderten Sollwerten vₛₒₗₗᵥ durch Berechnung der zeitlichen Ableitung der veränderten Sollwerte vₛₒₗₗᵥ veränderte Beschleunigungssollwerte. Von der Steuereinheit 17 wird der Überwachungseinheit 8 mittels des Signals W mitgeteilt, welches Werkzeug gerade in die Werkzeugaufnahmevorrichtung 22 eingespannt ist. Im Rahmen des Ausführungsbeispiels ist dies, wie schon gesagt, das Werkzeug 12a. Die Überwachungseinheit 8 hat Zugriff auf den Speicher 3 und liest aus dem Speicher 3 zu dem jeweiligen Werkzeug, das gerade in die Werkzeugaufnahmevorrichtung 22 eingespannt ist, die zu dem Werkzeug zugehörigen spezifischen Bewegungsgrenzwerte aus, was durch einen Pfeil 28 dargestellt ist.

Die Überwachungseinheit 8 überwacht im Folgenden die veränderten Sollwerte vₛₒₗₗᵥ und aus den veränderten Sollwerten abgeleitete (z.B. Ableitung nach der Zeit) Vergleichswerte, die im Rahmen des Ausführungsbeispiels in Form von abgeleiteten veränderten Beschleunigungssollwerten aₛₒₗₗᵥ vorliegen auf Überschreitung der den jeweiligen gerade angetriebenen Werkzeug, d.h. das Werkzeug das gerade in die Werkzeugaufnahmevorrichtung 22 eingespannt ist, zugeordneten spezifischen Bewegungsgrenzwerte. Bei Überschreitung eines der Bewegungsgrenzwerte wird ein Alarmsignal A von der Überwachungseinheit 8 an die Bedieneinrichtung 21 ausgegeben. Auf der Bedieneinrichtung 21 wird dann dem Anwender ein entsprechender Alarm gemeldet.

Falls keiner der Bewegungsgrenzwerte überschritten wird, werden von der Überwachungseinheit 8 die veränderten Sollwerte vₛₒₗₗᵥ unverändert als Ausgangssollwerte v_{sollv'} ausgegeben. Falls jedoch ein Überschreiten eines Bewegungsgrenzwertes detektiert wird, folgt neben dem Erzeugen eines Alarmsignals ein Abbremsen der Bewegung des gerade angetriebenen Werkzeugs, d.h. im Ausführungsbeispiel des Werkzeug 12a, bis zum Stillstand des angetriebenen Werkzeugs 12a. Die Ausgangssollwerte v_{sollv'} werden dabei von der Überwachungseinheit 8 derart erzeugt, dass beim Abbremsen der Bewegung des angetriebenen Werkzeugs 12a, d.h. des Werkzeugs das gerade in die Werkzeugaufnahmevorrichtung 22 eingespannt ist, die Bewegungsgrenzwerte für das gerade angetriebene Werkzeug 12a nicht überschritten werden. Im Rahmen des Ausführungsbeispiels wird diese Funktionalität von der Überwachungseinheit 8 ausgeführt.

Dies muss jedoch nicht notwendigerweise so sein. Es ist z.B. auch möglich, dass die Überwachungseinheit 8 lediglich eine Überwachung und Überschreitung der Bewegungsgrenzwerte durchführt und im Falle einer Überschreitung eines Bewegungsgrenzwerts das Alarmsignal A, zusätzlich z.B. an die Sollwertermittlungseinheit 7 sendet, und diese dann entsprechend veränderte Sollwerte vₛₒₗₗᵥ zum Abbremsen der Bewegung des Werkzeugs 12a bis zum Stillstand erzeugt oder dass das Alarmsignal A zusätzlich zur Meldung ein Abbremsen der Werkzeugs und/oder Abschalten der Werkzeugmaschine bewirkt ohne das Rücksicht auf die Bewegungsgrenzwerte des Werkzeugs genommen wird.

Insbesondere wird bei der erfindungsgemäßen Berücksichtigung der Grenzwerte der Bremsvorgang so gesteuert, dass die Absolutwerte der während des Bremsens auftretenden negativen Beschleunigungswerte den entsprechenden Beschleunigungsgrenzwert nicht überschreiten. In Ausnahmesituationen wie z.B. beim Drücken der Not-Aus-Taste der Bedieneinrichtung 21 kann die Steuereinrichtung 18 solchermaßen ebenfalls den Bremsvorgang derart steuern, dass die Bewegungsgrenzwerte des gerade angetriebenen Werkzeugs nicht überschritten werden.

Es sein an dieser Stelle angemerkt, dass die Sollwerterzeugungseinheit, die Begrenzungseinheit, die Sollwertermittelungseinheit und/oder die Überwachungseinheit im Allgemeinen in Form von Software vorliegen welche von einem einzelnen oder mehrerer Prozessoren ausgeführt wird.

Weiterhin sei an dieser Stelle angemerkt, dass im Rahmen des Ausführungsbeispiels die Sollwerte in Form von Geschwindigkeitssollwerten vorliegen. Die Sollwerte können aber auch in Form von Lagesollwerten, Beschleunigungssollwerten oder Rucksollwerten vorliegen.

Ferner sei an dieser Stelle angemerkt, dass für die Erfindung die Werkzeugmaschine nicht unbedingt einen Werkzeugwechsler aufweisen muss, sondern der Werkzeugwechsel kann auch per Hand, z.B. durch einen Bediener der Werkzeugmaschine erfolgen. Es muss lediglich sicher gestellt sein, dass die Steuereinrichtung Kenntnis hat welches Werkzeug gerade in der Werkstückaufnahme eingespannt ist und somit angetrieben wird.

Oftmals werden, z.B. zur Vermessung eines Werkstückes, ein Messtaster oder eine Kamera in die Werksstückaufnahmevorrichtung eingespannt. Es sei an dieser Stelle angemerkt, dass im Rahmen Erfindung unter anderem auch ein Messtaster und eine Kamera als Werkzeuge angesehen werden.

Weiterhin sei angemerkt, dass die Bewegung des Werkstücks nicht unbedingt wie im Ausführungsbeispiel in Form einer rotatorischen Bewegung vorliegen muss, sondern sie kann auch in Form einer linearen Bewegung oder einer Kombination von linearer Bewegung und rotatorischer Bewegung vorliegen.

Ferner sei an dieser Stelle angemerkt, dass es alternativ auch möglich ist, dass das Signal W nicht wie vorhergehend beschrieben, von der Steuereinheit 17 an die Begrenzungseinheit 2 übermittelt wird, sondern von der Steuereinheit 17 an den Speicher 3 übermittelt wird. Im Speicher 3 werden dann, mittels des Signals W, die zum Werkzeug 12a zugehörigen Bewegungsgrenzwerte selektiert und an die Begrenzungseinheit 2 übermittelt (siehe Pfeil 6).

## Patentansprüche

1. Steuereinrichtung zur Steuerung einer Werkzeugmaschine (23) von der Werkzeuge (12a,12b,12c) antreibbar sind, wobei die Steuereinrichtung (18) aufweist,
- eine Sollwerterzeugungseinheit (1), die zur Erzeugung von Sollwerten (vₛₒₗₗ) zur Steuerung der Bewegung eines Werkzeugs (12a), eingerichtet ist,
**dadurch gekennzeichnet, dass** die Steuereinrichtung weiterhin aufweist,
- einen Speicher (3), der zur Speicherung eines den Werkzeugen (12a,12b,12c) jeweilig zugeordneten für das jeweilige Werkzeug (12a,12b,12c) spezifischen Bewegungsgrenzwerts (vₐₘₐₓ, v_{bmax}, v_{cmax}) oder von mehreren den Werkzeugen (12a,12b,12c) jeweilig zugeordneten für das jeweilige Werkzeug (12a,12b,12c) spezifischen Bewegungsgrenzwerten (vₐₘₐₓ, aₐₘₐₓ, v_{bmax} a_{bmax}, v_{cmax}, a_{cmax}) eingerichtet ist,
- eine Begrenzungseinheit (2), wobei die Begrenzungseinheit (2) derart ausgebildet ist, dass von der Begrenzungseinheit(2) begrenzte Sollwerte (v_{sollb}) ermittelt werden, indem von der Begrenzungseinheit (2) die Sollwerte (vₛₒₗₗ) anhand des für das jeweilig angetriebene Werkzeug (12a) zugeordneten spezifischen Bewegungsgrenzwerts oder der für das jeweilig angetriebene Werkzeug (12a) zugeordneten spezifischen Bewegungsgrenzwerten, derart begrenzt werden, dass von den begrenzten Sollwerten (v_{sollb}) der Bewegungsgrenzwert oder die Bewegungsgrenzwerte bei der Bewegung des Werkzeugs (12a) nicht überschritten werden,
- eine Sollwertermittelungseinheit (7), die zur Ermittelung von veränderten Sollwerten (vₛₒₗₗᵥ) aus den begrenzten Sollwerten (v_{sollb}) und weiteren Sollwerten (v_{sollw}) eingerichtet ist, wobei die weiteren Sollwerte von einem Anwender über eine Bedieneinrichtung (21) oder mittels spezifischer Programme in einer Anwendereinheit erzeugbar sind und
- eine Überwachungseinheit (8), die derart ausgebildet ist, dass die Überwachungseinheit (8) die veränderten Sollwerte (vₛₒₗₗᵥ) und/oder von den veränderten Sollwerten abgeleitete veränderte Beschleunigungssollwerte auf Überschreitung, des dem jeweilig angetriebenen Werkzeugs (12a) zugeordneten spezifischen Bewegungsgrenzwerts oder der dem jeweiligen angetriebenen Werkzeug zugeordneten spezifischen Bewegungsgrenzwerten überwacht und bei Überschreitung eines Bewegungsgrenzwerts ein Alarmsignal (A) ausgibt.

2. Steuereinrichtung nach Anspruch 1, **dadurch gekennzeichnet , dass** die Steuereinrichtung (18) derart ausgebildet ist, dass bei einer von der Überwachungseinheit (8) detektierten Überschreitung eines Bewegungsgrenzwerts die Steuereinrichtung (18) derart ein Abbremsen der Bewegung des jeweilig angetriebenen Werkzeugs (12a) bis zum Stillestand des jeweilig angetriebenen Werkzeugs (12a) steuert, dass der oder die Bewegungsgrenzungswerte während des Abbremsvorgangs für das jeweilig angetriebene Werkzeug (12a) nicht überschritten werden.

3. Steuereinrichtung nach einen der vorhergehenden Ansprüche, **dadurch gekennzeichnet , dass** die Sollwerte (vₛₒₗₗ) als Lagesollwerte, Geschwindigkeitssollwerte, Beschleunigungssollwerte oder Rucksollwerte vorliegen.

4. Steuereinrichtung nach einen der vorhergehenden Ansprüche, **dadurch gekennzeichnet, dass** der Bewegungsgrenzwert als Geschwindigkeitsbewegungsgrenzwert, Beschleunigungsbewegungsgrenzwert oder Ruckbewegungsgrenzwert oder die Bewegungsgrenzwerte als Geschwindigkeitsbewegungsgrenzwerte, Beschleunigungsbewegungsgrenzwerte und/oder Ruckbewegungsgrenzwerte vorliegen.

5. Werkzeugmaschine mit einer Steuereinrichtung nach einem der Ansprüche 1 bis 4.

## Claims

1. Control device for controlling a machine tool (23) which can be used to drive tools (12a, 12b, 12c), the control device (18) having
- a desired value generating unit (1) which is set up to generate desired values (vₛₒₗₗ) for controlling the movement of a tool (12a),
**characterized in that** the control device furthermore has
- a memory (3) which is set up to store a movement limit value (vₐₘₐₓ, v_{bmax}, v_{cmax}) which is respectively assigned to the tools (12a, 12b, 12c) and is specific to the respective tool (12a, 12b, 12c) or a plurality of movement limit values (vₐₘₐₓ, aₐₘₐₓ, v_{bmax}, a_{bmax}, v_{cmax}, a_{cmax}) which are respectively assigned to the tools (12a, 12b, 12c) and are specific to the respective tool (12a, 12b, 12c),
- a limiting unit (2), the limiting unit (2) being designed in such a manner that desired values (v_{sollb}) which are limited by the limiting unit (2) are determined by virtue of the limiting unit (2) limiting the desired values (vₛₒₗₗ), using the assigned movement limit value which is specific to the respectively driven tool (12a) or the assigned movement limit values which are specific to the respectively driven tool (12a), in such a manner that the movement limit value(s) is/are not exceeded by the limited desired values (Vₛₒₗₗ) when moving the tool (12a),
- a desired value determination unit (7) which is set up to determine changed desired values (vₛₒₗₗᵥ) from the limited desired values (v_{sollb}) and further desired values (v_{sollw}), a user being able to generate the further desired values via an operating device (21) or by means of specific programs in a user unit and
- a monitoring unit (8) which is designed in such a manner that the monitoring unit (8) monitors the changed desired values (vₛₒₗₗᵥ) and/or changed desired acceleration values derived from the changed desired values in order to determine whether they exceed the specific movement limit value assigned to the respectively driven tool (12a) or the specific movement limit values assigned to the respective driven tool and outputs an alarm signal (A) if a movement limit value is exceeded.

2. Control device according to Claim 1, **characterized in that** the control device (18) is designed in such a manner that, if the monitoring unit (8) detects that a movement limit value has been exceeded, the control device (18) controls braking of the movement of the respectively driven tool (12a) until the respectively driven tool (12a) comes to a standstill in such a manner that the movement limit value(s) is/are not exceeded during the braking operation for the respectively driven tool (12a).

3. Control device according to one of the preceding claims, **characterized in that** the desired values (vₛₒₗₗ) are in the form of desired position values, desired speed values, desired acceleration values or desired jerk values.

4. Control device according to one of the preceding claims, **characterized in that** the movement limit value is in the form of a speed movement limit value, an acceleration movement limit value or a jerk movement limit value or the movement limit values are in the form of speed movement limit values, acceleration movement limit values and/or jerk movement limit values.

5. Machine tool having a control device according to one of Claims 1 to 4.

## Revendications

1. Dispositif de commande d'une machine outil ( 23 ) par lequel des outils ( 12a, 12b, 12c ) peuvent être entraînés, le dispositif ( 18 ) de commande comprenant,
- une unité ( 1 ) de production de valeurs de consigne, qui est conçue pour la production de valeurs ( Vₛₒₗₗ ) de consigne pour la commande du déplacement d'un outil ( 12a ),
**caractérisé en ce que** le dispositif de commande comprend en outre,
- une mémoire ( 3 ) qui est conçue pour la mémorisation d'une valeur ( Vₐₘₐₓ, V_{bmax}, V_{cmax} ) limite de déplacement affectée respectivement aux outils ( 12a, 12b, 12c ) et spécifique à l'outil ( 12a, 12b, 12c ) respectif ou de plusieurs valeurs ( Vₐₘₐₓ, aₐₘₐₓ, V_{bmax}, a_{bmax}, V_{cmax}, a_{cmax} ) de limite de déplacements affectées respectivement aux outils ( 12a, 12b, 12c ) et spécifiques à l'outil ( 12a, 12b, 12c ) respectif,
- une unité ( 2 ) de limitation, l'unité ( 2 ) de limitation étant constituée de manière à ce que des valeurs ( V_{sollb} ) de consigne, limitées par l'unité ( 2 ) de limitation, soient déterminées par le fait que par l'unité ( 2 ) de limitation, les valeurs ( Vₛₒₗₗ ) de consigne sont limitées aux moyens de la valeur de limitation de déplacement spécifique affectée à l'outil ( 12a ) entraîné respectivement ou des valeurs de limitation de déplacement spécifique affectée à l'outil ( 12a ) entraîné respectivement de manière à ce que, lors du déplacement de l'outil ( 12a ), la valeur de limitation du déplacement ou les valeurs de limitation du déplacement ne soient pas dépassées par les valeurs ( V_{sollb} ) de consigne limitées,
- une unité ( 7 ) de détermination de valeurs de consigne, qui est conçue pour la détermination de valeurs ( Vₛₒₗₗᵥ ) de consigne modifiées à partir des valeurs ( V_{sollb} ) de consigne limitées et d'autres valeurs ( V_{sollw} ) de consigne, les autres valeurs de consigne pouvant être produites par un utilisateur par l'intermédiaire d'un dispositif ( 21 ) de service ou au moyen de programmes spécifiques dans une unité utilisateur, et
- une unité ( 8 ) de contrôle, qui est constituée de manière à ce que l'unité ( 8 ) de contrôle contrôle que les valeurs ( V_{sollw} ) de consigne modifiées et/ou les valeurs de consigne d'accélération modifiées déduites des valeurs de consigne modifiées ne dépassent pas la valeur limite de déplacement spécifique affectée à l'outil ( 12a ) entraîné respectivement ou les valeurs limites de déplacement spécifiques affectées à l'outil entraîné respectivement, et qui émet un signal ( A ) d'alerte en cas de dépassement d'une valeur limite de déplacement.

2. Dispositif de commande suivant la revendication 1, **caractérisé en ce que** le dispositif ( 18 ) de commande est constitué de façon à ce que, si un dépassement d'une valeur limite de déplacement est détectée par l'unité ( 8 ) de contrôle, le dispositif ( 18 ) de commande commande un freinage de déplacement de l'outil ( 12a ) entraîné respectivement jusqu'à l'état d'arrêt de l'outil ( 12a ) entraîné respectivement, de manière à ce que la ou les valeurs limites de déplacement ne soient pas dépassées pendant l'opération de freinage de l'outil ( 12a ) entraîné respectivement.

3. Dispositif de commande suivant l'une des revendications précédentes, **caractérisé en ce que** les valeurs ( Vₛₒₗₗ ) de consigne se présentent sous la forme de valeurs de consigne de position, de valeurs de consigne de vitesse, de valeurs de consigne d'accélération ou de valeurs de consigne de suraccélération.

4. Dispositif de commande suivant l'une des revendications précédentes, **caractérisé en ce que** la valeur limite de déplacement se présente sous la forme d'une valeur limite de vitesse de déplacement, d'une valeur limite d'accélération de déplacement, d'une valeur limite de suraccélération de déplacement ou les valeurs limites de déplacement se présentent sous la forme de valeurs limites de vitesse de déplacement, de valeurs limites d'accélération de déplacement et/ou de valeurs limites de suraccélération de déplacement.

5. Machine-outil ayant un dispositif de commande suivant l'une des revendications 1 à 4.
